Europäisches Patentamt

European Patent Office

Office européen des brevets

(11) Numéro de publication: **0 315 498**
**A1**

## (12) DEMANDE DE BREVET EUROPEEN

(21) Numéro de dépôt: 88402493.6

(22) Date de dépôt: 16.09.88

(51) Int. Cl.⁴: **F 16 P 3/00**
B 62 J 27/00, A 42 B 3/00

(30) Priorité: 17.09.87 FR 8712910

(43) Date de publication de la demande:
10.05.89 Bulletin 89/19

(84) Etats contractants désignés: ES

(71) Demandeur: Breant, Eric
37, rue Robert Schuman
F-14000 Caen (FR)

(72) Inventeur: Breant, Eric
37, rue Robert Schuman
F-14000 Caen (FR)

(54) Dispositif rendant obligatoire le port du casque.

(57) Dispositif rendant obligatoire le port du casque et comportant un détecteur de proximité (A), un relais (B) normalement excité lorsque détecteur de proximité (A) émet un signal, un contacteur (C) à double effet monté en parallèle sur les contacts (7,8) du relais (B) et agencé pour détecter d'une part la présence de l'utilisateur et d'autre part la position de la machine et des moyens réfléchissants (D) agencés sur le casque (2) en vue de coopérer avec le détecteur de proximité (A). Le dispositif agencé sur la machine de façon inviolable est combiné avec des moyens antivols.

EP 0 315 498 A1

Description

## DISPOSITIF RENDANT OBLIGATOIRE LE PORT DU CASQUE

La présente invention a trait à un dispositif adapté et agencé pour rendre obligatoire le port du casque.

Chaque année, des millions de personnes sont victimes d'accidents, soit de la route, soit du travail et les traumatismes engendrés sont d'autant plus graves lorsque ces personnes ne s'étaient pas munies des moyens de sécurité prévus à cet effet. Ceci entraîne des frais inconsidérés et sans cesse croissants à la charge de la société.

Le but de la présente invention est de rémédier à cette nuisance en proposant un dispositif rendant obligatoire le port du casque. Pour cela, elle propose un dispositif empêchant le fonctionnement d'une machine si son utilisateur ne s'est pas muni de son casque.

Suivant ce principe, l'invention prévoit un certain nombre de moyens aptes à coopérer entre eux et l'alimentation de la machine de façon que la machine ne pourra pas être mise en service si l'utilisateur n'est pas muni de casque ou sera mise automatiquement hors service si l'utilisateur retire son casque.

De tels dispositifs sont déjà connus dans le domaine de l'automobile, le véhicule ne pouvant démarrer si le conducteur et/ou les passagers n'ont pas correctement bouclé leur ceinture de sécurité.

Par exemple, la demande de brevet français 2 321 398 décrit un dispositif comportant au moins deux interrupteurs montés en parallèle, l'un sous le siège du conducteur ( et/ou des passagers ), l'autre dans la et/ou les boucles des ceintures de sécurité. Ces interrupteurs sont montés en série sur le circuit de démarrage et coupent celui-ci si les ceintures de sécurité ne sont pas correctement bouclées.

Un autre exemple est fourni par le brevet américain 3 748 639 dans lequel le dispositif comprend une pluralité d'émetteurs et de récepteurs agencés sur la ceinture de sécurité et sur une partie proche du véhicule, en vue de fournir un signal si le conducteur et les passagers n'ont pas tous bouclé leur ceinture de sécurité.

Il n'existe malheureusement aucun système équivalent pour les machines dont l'utilisateur doit porter un casque, en particulier mais non exclusivement les vélomoteurs, motocyclettes avec ou sans side-car. Le même principe peut être appliqué à des postes de travail comme par exemple des postes de soudure ou des machines-outils comme des marteaux-piqueurs ou autres pour lesquels le dispositif empêchera le fonctionnement de la machine si l'utilisateur n'est pas muni du casque ou autre dispositif de protection prévu.

D'autres particularités de l'invention apparaîtront dans la description qui va suivre, donnée à titre non limitatif en regard des dessins annexés et dans lesquels

la figure 1 est un schéma du dispositif selon la présente invention illustrant la situation où la machine est au repos, l'utilisateur ne se servant pas de la machine,

la figure 2 est un schéma du dispositif selon la présente invention illustrant la situation où l'utilisateur veut se servir de la machine mais n'est pas muni de son casque,

et la figure 3 est un schéma du dispositif selon la présente invention illustrant la situation où l'utilisateur, muni de son casque, se sert de la machine.

Dans la description qui va suivre, il sera pris comme exemple un dispositif rendant obligatoire le port du casque pour un motocycliste mais comme il a déjà été dit, il est bien entendu que cet exemple n'est nullement limitatif.

Sur les figures, on peut voir que le dispositif selon l'invention se compose essentiellement de quatre parties répertoriées A, B, C et D (figure 3).

A représente un détecteur de proximité agencé à l'avant de la motocyclette en vue de coopérer avec la partie D. Celle-ci est par exemple constituée par des zones réfléchissantes 1 situées sur le casque 2 de l'utilisateur. Le détecteur de proximité A est normalement alimenté par la batterie 3 (ou volant magnétique) de la motocyclette à travers le contacteur à clef 4 servant en même temps de blocage de direction.

Le détecteur de proximité A peut être muni de lentilles réflex 5 émettant un rayonnement en direction du casque 2, ledit rayonnement étant réfléchi par les zones réfléchissantes 1 du casque 2 et récupérant ledit rayonnement en vue d'émettre un signal à la borne 6 dudit détecteur de proximité A.

Ce signal est envoyé à un relais B dont les contacts 7, 8 restent ouverts en l'absence dudit signal et se ferment en présence dudit signal.

Le détecteur de proximité A et le relais B peuvent être tous deux disposés dans un boîtier (non représenté) monté de façon orientable sur une partie non tournante de la machine, par exemple le tableau de bord ou la potence de la fourche avant.

Branché en parallèle sur les contacts 7, 8 du relais B, un contacteur à double effet C est agencé sous la selle 9 de la motocyclette en vue de détecter d'une part la présence de l'utilisateur et d'autre part la position de la machine. Pour cela, le contacteur C comprend deux contacts 10, 11, agencés de façon à s'ouvrir lorsque le motocycliste s'assied sur la selle 9. Pour ce faire, une liaison mécanique 12, solidaire de la selle 9 et rappelée par un ressort (non représenté) appuie sur une lame flexible 13 portant le contact 11. Le contacteur C comprend encore deux autres contacts 14, 15 maintenus normalement fermés par une bille 16 prisonnière d'une goulotte 17. Les contacts 11 et 14 sont montés en série. Le dispositif d'allumage 18 de la motocyclette est électriquement relié d'une part au contact 7 du relais B et au contact 15 du contacteur C et d'autre part à la masse.

Le dispositif fonctionne de la manière suivante : Comme on peut le voir sur la figure 1, la motocyclette est au repos. Les contacts 7 et 8 sont ouverts car le relais B ne reçoit aucun signal du détecteur de proximité A. Personne n'appuyant sur la selle 9, les contacts 10 et 11 sont fermés ainsi que les contacts 14 et 15 sous l'influence de la bille 16. Si l'on tourne la clef dans le contacteur 4, le courant issu de la batterie 3 passe par les contacts 10, 11, 14 et 15 jusqu'au dispositif d'allumage 18. Il est donc possible de démarrer le moteur. Cette situation a été prévue pour différents cas comme par exemple pour pouvoir effectuer des réglages à chaud sur le moteur.

Si le pilote s'assied sur la selle pour démarrer, deux situations peuvent se présenter :

1) il ne porte pas de casque : c'est la situation représentée à la figure 2. Le pilote en s'asseyant sur la selle 9 appuie sur la lame flexible 13 par l'intermédiaire de la liaison mécanique 12, séparant ainsi les contacts 10 et 11. Le dispositif d'allumage 18 n'est donc plus alimenté et le moteur s'arrête. Les contacts 7 et 8 du relais B restent ouverts puisque le détecteur de proximité A bien qu'alimenté ne délivre aucun signal sur la borne 6.

2) il porte un casque 2 muni des zones réfléchissantes 1 : c'est la situation représentée à la figure 3. Les contacts 10 et 11 restent ouverts sous l'influence du poids du pilote mais le détecteur de proximité A, alimenté, émet et récupère un rayonnement réfléchi par les zones 1. Il délivre alors un signal au relais B qui ferme ses con tacts 7 et 8, alimentant le dispositif d'allumage 18 : la machine fonctionne normalement.

Dans le cas où le pilote perd le contrôle de sa machine, et que celle-ci vienne à se coucher, la bille 16 est expulsée de la goulotte 17. Les contacts 14 et 15 s'ouvrent, coupant ainsi l'allumage de la machine. Le dispositif selon l'invention allie donc l'obligation du port du casque à la sécurité en cas d'accident.

Le détecteur de proximité A est un appareil connu en soi et peut être de toute nature. Il peut être à infrarouges, à ultrasons, optique ou radio. Il faut donc prendre les moyens réfléchissants D dans un sens large, aussi bien dans la présente description que dans les revendications qui vont suivre.

De même, le relais B bien que représenté par un relais électromécanique pourrait tout aussi bien être un relais thermo-mécanique (par exemple un bilame) ou électronique (par exemple un thyristor).

De même, le contacteur C à double effet peut être électromécanique mais aussi électrooptique ou encore une combinaison de ces différents types.

Bien que dans la présente description nous n'ayons fait référence qu'à un détecteur de proximité A coopérant avec des moyens réfléchissants D agencé sur le casque du pilote, il est bien entendu que l'on peut étendre l'invention aux passagers de la motocyclette et/ou du side-car. Dans ce cas, on dispose d'autres contacteurs C sous les sièges des passagers et d'autres détecteurs de proximité, par exemple à l'avant du side-car et sur le garde-boue arrière de la motocyclette pour le passager arrière. Les moyens réfléchissants D seront alors agencés sur la partie arrière du casque du passager.

Un autre avantage du présent dispositif est qu'il est facile de le combiner avec un système antivol agissant sur le détecteur de proximité et/ou sur le contacteur C en vue de rendre la machine inutilisable même dans le cas où le voleur serait pourvu d'un casque muni des moyens réfléchissants D. De nombreux moyens antivols peuvent être envisagés : blocage des contacts 10, 11, 14 et 15 en position ouverte, systèmes codés alphanumérique ou autres coupant l'alimentation du détecteur A etc...

Afin de rendre le dispositif encore plus efficace, il est envisagé de l'agencer de manière inviolable, par exemple, pour une motocyclette de disposer les différents éléments dans des boîtiers soudés sur le cadre avec les différentes liaisons électriques passant à l'intérieur du cadre.

Il est évident que la description qui précède ainsi que les dessins annexés ne sont donnés qu'à titre d'exemple illustratif et ne peuvent présenter un caractère limitatif. Au contraire de nombreuses variantes peuvent être apportées sans pour autant sortir du cadre de l'invention. En particulier, ce dispositif peut être associé à tout dispositif d'alarme visuel ou sonore.

**Revendications**

1) Dispositif de sécurité agencé sur une machine, caractérisé par des moyens (A,B,C,D) de détection et de commutation, coopérant entre eux et adaptés pour commander l'alimentation de la machine en vue de rendre obligatoire le port d'un casque.

2) Dispositif selon la revendicaton 1 caractérisé en ce que lesdits moyens comprennent au moins un détecteur de proximité (A), un relais (B) normalement excité lorque ledit détecteur de proximité émet un signal, au moins un contacteur (C) à double effet monté en parallèle sur les contacts (7,8) du relais (B) et agencé pour détecter d'une part la présence de l'utilisateur et d'autre part la position de la machine, et des moyens réfléchissants (D) agencés sur le casque (2) en vue de coopérer avec le détecteur de proximité (A).

3) Dispositif selon la revendication 2 caractérisé en ce que le détecteur de proximité (A) est un détecteur à infrarouges ou à ultrasons ou optique ou radio.

4) Dispositif selon la revendication 2 caractérisé en ce que le relais (B) est un relais électromécanique ou thermomécanique (par exemple un bilame) ou électronique ( par exemple un thyristor).

5) Dispositif selon la revendication 2 caractérisé en ce que le contacteur (C) est un contacteur électromécanique ou optique ou électronique.

6) Dispositif selon l'une des revendications 1 à 5, caractérisé en ce qu'il est agencé sur un véhicule à deux ou trois roues du genre vélomoteur ou motocyclette en vue d'obliger le conducteur à porter un casque.

7) Dispositif selon la revendication 6 caractérisé en ce qu'il comporte plusieurs moyens (A), plusieurs moyens (C) et plusieurs moyens (D) agencés de façon à obliger le ou les passagers à porter un casque.

8) Dispositif selon l'une des revendications 1 à 5, caractérisé en ce qu'il est agencé sur un poste de travail ou sur un outil de travail en vue d'obliger l'utilisateur à porter un casque ou autre appareil de protection.

9) Dispositif selon l'une des revendications 1 à 8, caractérisé en ce qu'il est combiné avec des moyens antivols.

10) Dispositif selon l'une des revendications 1 à 9, caractérisé en ce qu'il est agencé de manière inviolable.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | US-A-3 748 639 (DOBEBOE et al.)<br>* Colonne 1, lignes 12-25; colonne 3, lignes 30-38; revendication 4; figures 1,2 * | 1,6-10 | F 16 P 3/00<br>B 62 J 27/00<br>A 42 B 3/00 |
| A | | 2-5 | |
| Y | FR-A-2 420 716 (ELIMEX)<br>* Revendications 1,2,9; page 2, lignes 15,16,36-40; page 3, lignes 14-17 * | 1,6-10 | |
| A | FR-A-2 374 586 (LEDERREY)<br>* Page 1, lignes 1-7,24-38; page 2, lignes 1-35 * | 1,6,8 | |
| A | US-A-2 331 023 (GAYRING)<br>* Colonne 2, lignes 29-32; figures 1-3 * | 1,8 | |
| A | US-A-3 827 040 (GAYRING)<br>* Résumé; figures 1,2 * | 1,2,8 | |
| A | DE-A-3 234 601 (SIEMENS)<br>* Page 3, lignes 1-17 *<br>----- | 9 | **DOMAINES TECHNIQUES RECHERCHES (Int. Cl.4)**<br><br>F 16 P<br>B 62 J |

Le présent rapport a été établi pour toutes les revendications

| Lieu de la recherche | Date d'achèvement de la recherche | Examinateur |
|---|---|---|
| LA HAYE | 08-02-1989 | KUHN E.F.E. |